# FASCICULE DE BREVET EUROPEEN

(11) **EP 0 526 365 B1**
(45) Date de publication et mention de la délivrance du brevet: **31.01.1996**
(21) Numéro de dépôt: 92440082.3
(22) Date de dépôt: 07.07.1992
(51) Int. Cl.: A01D 78/10, A01B 73/04

(54) **Machine de fenaison, notamment une andaineuse de végétaux coupés**
Heuwerbungsmaschine, insbesondere Schwader für geschnittenes Pflanzengut
Haymaking machine, particularly a crop windrower

(30) Priorité: 11.07.1991 FR 9108926
(43) Date de publication de la demande: 03.02.1993
(73) Titulaire: KUHN S.A., F-67700 Saverne (FR)
(72) Inventeur: Aron, Jérôme, F-67330 Dossenheim Sur Zinsel (FR); Demanet, Didier, F-57444 Reding (FR)
(74) Mandataire: Andres, Jean-Claude

(56) Documents cités:
- EP-A- 0 316 559
- DE-A- 3 328 537
- FR-A- 2 063 497
- FR-A- 2 355 440
- FR-A- 2 375 814
- GB-A- 2 061 082
- US-A- 3 820 314
- US-A- 4 077 189
- Prospectus KUHN-9202181 daté de novembre 1989, machine référencée GA 381 GM.

## Description

La présente invention se rapporte à une machine de fenaison, notamment une andaineuse de végétaux coupés, comportant un bâti support, au moins une roue râteleuse, un dispositif de protection qui s'étend au moins partiellement autour de ladite roue râteleuse et un déflecteur qui limite la projection latérale des végétaux déplacés par la roue râteleuse, lequel déflecteur est articulé à travers un axe sur une tige de réglage permettant de modifier sa position par rapport à la roue râteleuse.

Sur une machine connue, référencée GA 381 GM dans le prospectus KUHN-9202181 daté de Novembre 1989, les réglages du déflecteur doivent être effectués manuellement. Lesdits réglages ont pour objet d'éloigner ou de rapprocher le déflecteur de la roue râteleuse, en fonction du volume des végétaux présents, afin de bien former l'andain et/ou de transposer le déflecteur de la position de travail dans une position de transport et vice versa.

Ces opérations nécessitent l'arrêt du tracteur et de la machine et des déplacements de la part de l'utilisateur. En effet, pour chaque réglage, celui-ci doit descendre du tracteur. Par conséquent, ces opérations deviennent rapidement rebutantes pour les utilisateurs et occasionnent des pertes de temps.

Pour ces raisons, elles sont parfois négligées, ce qui nuit, selon le cas, à la qualité du travail ou à la sécurité.

D'autre part, si la largeur de la machine est importante, les dimensions de la roue râteleuse et du dispositif de protection doivent être réduites pour le transport sur route notamment. Les transpositions qui sont nécessaires pour cela, ainsi que celles qu'il faut effectuer pour revenir en position de travail, doivent également être exécutées manuellement. Les inconvénients précités s'adressent par conséquent également à ces opérations.

La présente invention a notamment pour but de faciliter les réglages précités en vue d'améliorer la qualité de travail, la sécurité et le confort d'utilisation.

A cet effet, une importante caractéristique de l'invention consiste en ce que la machine comporte un vérin hydraulique qui se situe au-dessus de la roue râteleuse et qui est relié à la tige de réglage de manière à pouvoir la déplacer pour modifier la position du déflecteur, et qu'elle est pourvue de moyens qui font basculer le déflecteur autour de son axe d'articulation lorsqu'il est déplacé au moyen du vérin hydraulique.

Ledit vérin hydraulique permet de commander le réglage de l'écartement entre le déflecteur et la roue râteleuse depuis le siège du tracteur. Il permet aussi de faire basculer ledit déflecteur vers le haut, d'environ 180°, lorsqu'il est déplacé vers la roue râteleuse. Il peut ainsi être très facilement transposé au-dessus de la roue râteleuse notamment pour le transport. L'utilisateur a ainsi la possibilité de positionner le déflecteur en fonction du volume de l'andain ou pour mettre la machine en position de transport, sans que cela nécessite un arrêt. Un basculement inverse du déflecteur, pour revenir en position de travail, est également possible.

Selon une autre caractéristique de l'invention, le dispositif de protection comprend deux parties latérales articulées sur une partie centrale au moyen de pivots dirigés dans la direction d'avancement, la tige de réglage du déflecteur étant guidée dans un tube solidaire de l'une de ces parties latérales, tandis que le vérin hydraulique est articulé avec une de ses extrémités sur ladite tige de réglage et avec son autre extrémité sur l'autre partie latérale du dispositif de protection. Cet agencement permet de positionner, au moyen du vérin hydraulique, à la fois le déflecteur et les parties latérales du dispositif de protection. L'utilisateur peut ainsi commander à partir du tracteur les différents réglages du déflecteur pendant le travail, ainsi que la mise en position de transport du déflecteur et des parties latérales du dispositif de protection. Le retour en position de travail, qui est effectué au moyen du même vérin hydraulique, est également commandé à partir du tracteur.

Grâce à toutes ces facilités, l'utilisateur aura tendance à toujours régler correctement la machine au travail et durant le transport.

Selon une autre caractéristique de l'invention, le vérin hydraulique comporte un dispositif de verrouillage et de déverrouillage automatique. Ce dispositif permet d'éviter tout retour accidentel du dispositif de protection et du déflecteur de la position de transport dans la position de travail.

D'autres caractéristiques et avantages de l'invention ressortiront des revendications et de la description ci-après de modes de réalisation non limitatifs de l'invention, avec référence aux dessins annexés dans lesquels :
- la figure 1 représente une vue de dessus d'une machine selon l'invention en position de travail,
- la figure 2 représente une vue arrière de cette machine,
- la figure 3 représente une vue arrière de la machine en position de transport,
- les figures 4 à 7 représentent, à plus grande échelle, le déflecteur à différents stades lors de la mise en position de transport,
- la figure 8 représente une vue arrière d'une machine selon un autre mode de réalisation, en position de transport,
- les figures 9 à 14 montrent, à plus grande échelle, un dispositif de verrouillage et de déverrouillage automatique, dans différentes positions.

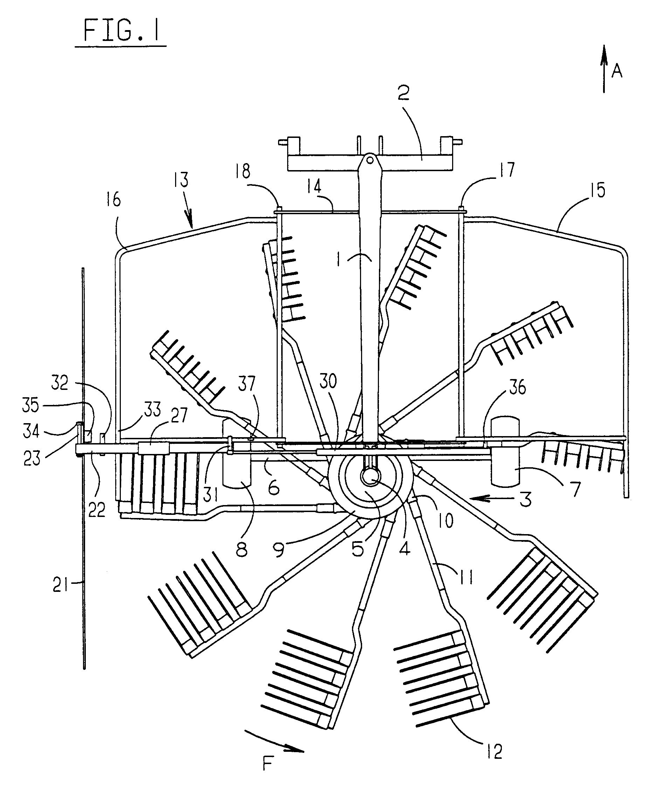

Telle qu'elle est représentée sur la figure 1, la machine selon l'invention comporte un bâti (1) en forme de poutre sensiblement horizontale. L'extrémité avant dudit bâti comporte un cadre (2) avec trois points d'accrochage servant à l'accouplement au dispositif de relevage hydraulique d'un tracteur, non représenté, qui est utilisé pour animer et déplacer la machine dans la direction (A). Une roue râteleuse (3) qui peut être entraînée en rotation dans le sens de la flèche (F) est reliée à l'extrémité arrière de ce bâti (1).

Ladite roue râteleuse (3) est montée de manière à pouvoir tourner sur un axe support (4) sensiblement vertical. L'extrémité supérieure de cet axe (4) est logée dans un boîtier (5) qui est lui-même lié à la poutre constituant le bâti (1). Une traverse (6) est fixée à l'extrémité inférieure de l'axe (4). Cette traverse (6) porte des roulettes (7, 8) qui se déplacent sur le sol durant le travail. La roue râteleuse (3) possède un carter rotatif (9) qui est monté sur l'axe support (4) au moyen de roulements à billes. Ce carter rotatif (9) se situe entre le boîtier (5) et la traverse (6). Dans son volume intérieur est prévue une came de commande qui est rendue solidaire de l'axe support (4). La partie supérieure de ce carter (9) est munie d'une couronne dentée. Celle-ci engrène avec un pignon d'entraînement qui est fixé sur un arbre qui s'étend hors du boîtier (5). Il est relié à l'arbre de prise de force du tracteur par l'intermédiaire d'arbres de transmission intermédiaires non représentés. Ladite couronne ainsi que son pignon d'entraînement se situent dans le volume intérieur du boîtier (5) qui assure leur protection.

Le carter (9) porte à sa périphérie des paliers (10) dans lesquels sont logés des bras porte-outils (11), de manière à ce qu'ils puissent pivoter autour de leurs axes géométriques longitudinaux. Ces bras (11) s'étendent à partir du carter (9) en forme de rayons. A leurs extrémités les plus éloignées dudit carter, ils sont munis d'outils (12) constitués par des fourches de râtelage disposées côte à côte. Les autres extrémités de ces bras (11) se situent dans le carter (9). Chacune porte un levier muni d'un galet qui est guidé dans la came de commande qui est logée à l'intérieur de ce carter (9).

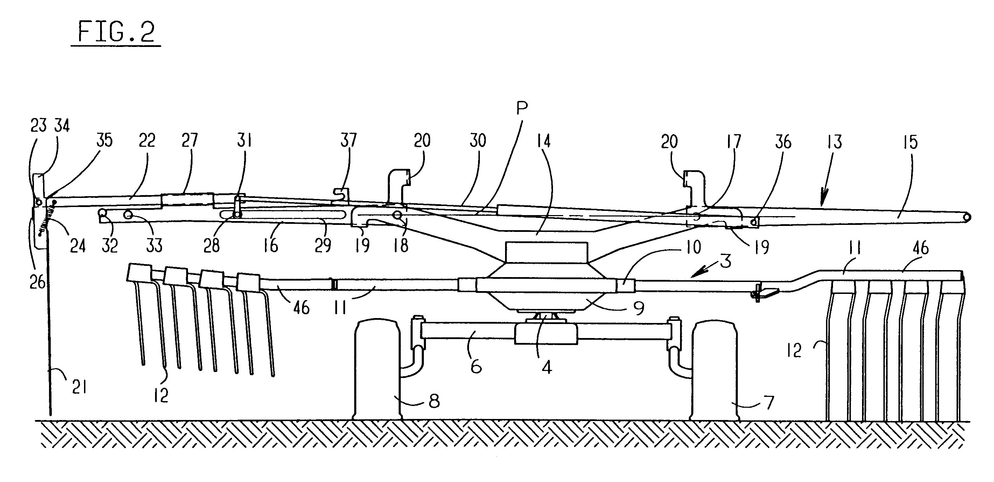

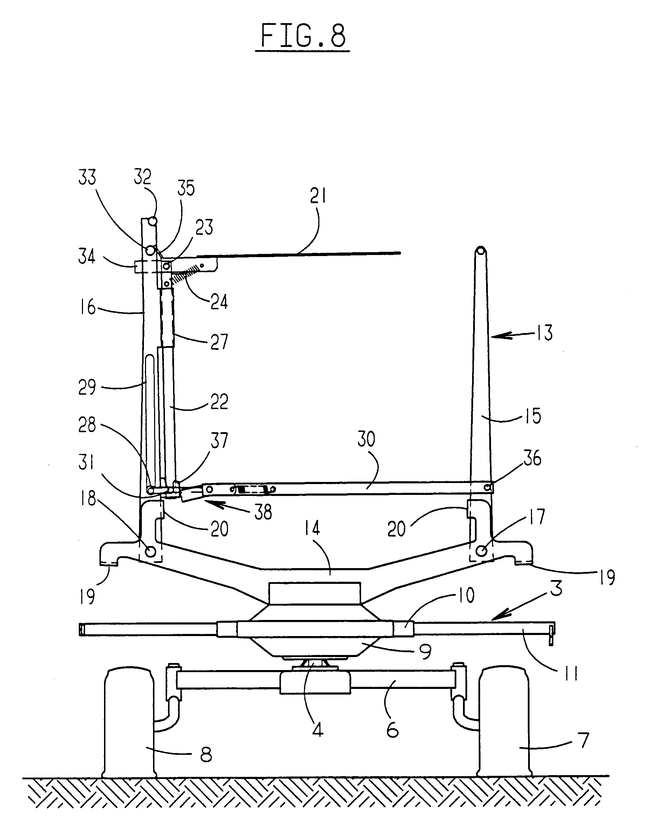

Au-dessus de la moitié avant de la roue râteleuse (3) est prévu un dispositif de protection (13). Ce dispositif se compose d'une partie centrale (14) qui est fixée sur le bâti (1) et de deux parties latérales (15 et 16) en forme de trapèzes. Ces deux parties latérales (15 et 16) sont articulées sur la partie centrale (14) au moyen de pivots (17, 18) dirigés dans la direction d'avancement (A). Elles peuvent être déplacées autour de ces pivots (17, 18) vers le haut, d'environ 90°, pour le transport. La partie centrale (14) comporte deux butées (19 et 20) pour chaque partie latérale (15 et 16). Les butées inférieures (19) servent à arrêter les parties latérales (15, 16) dans la position de travail, tandis que les butées supérieures (20) servent à les arrêter dans la position de transport (voir figures 2 et 8). Ces parties latérales (15 et 16) pourraient, si nécessaire, être prolongées vers l'arrière de manière à assurer une protection sur la moitié arrière de la roue râteleuse (3). Dans ce cas les pivots (17 et 18) pourraient également être prolongés vers l'arrière et porter une traverse identique à celles composant la partie centrale (14).

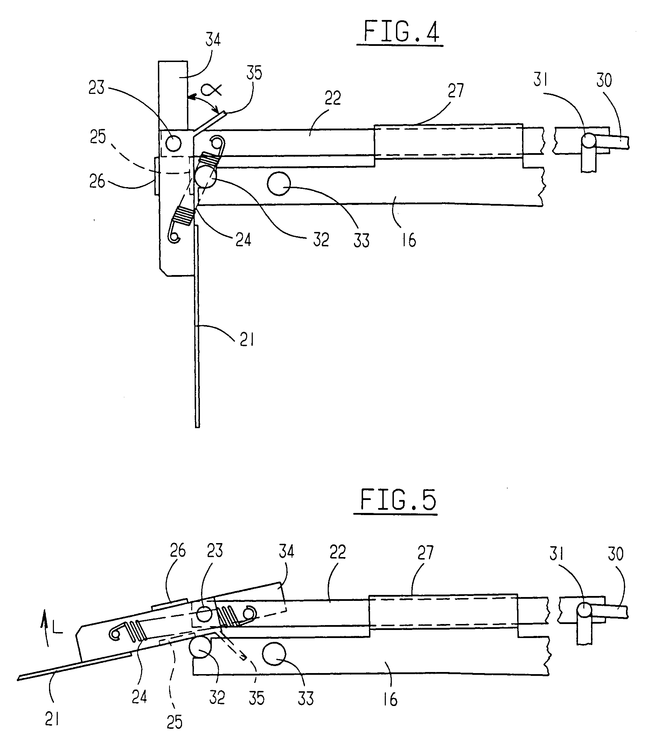

Sur le côté de la machine sur lequel la roue râteleuse (3) dépose l'andain est prévu un déflecteur (21). Il est constitué par un écran réalisé en toile ou en tôle ou en tiges souples placées côte à côte. Ce déflecteur (21) est fixé à l'extrémité d'une tige de réglage (22) au moyen d'un axe d'articulation (23). Entre cette tige (22) et le déflecteur (21) est disposé un ressort de traction (24). Son point d'attache sur la tige (22) se situe sensiblement au même niveau que l'axe d'articulation (23), alors que son point d'attache sur le déflecteur (21) se situe en-dessous dudit axe d'articulation (23) lorsque la machine est en position de travail. Le déflecteur (21) comporte deux arrêts (25 et 26). On voit notamment sur la figure 4 que l'un (25) de ces arrêts se situe sur le côté du déflecteur (21) qui est orienté vers la roue râteleuse (3) et l'autre (26) sur le côté opposé. Dans la position de travail, l'arrêt (25) est en contact avec la tige de réglage (22) et maintient le déflecteur (21) dans une position pratiquement verticale.

La tige de réglage (22) est guidée de manière à pouvoir coulisser dans un tube (27) qui est solidaire de la partie latérale (16) du dispositif de protection (13). Elle comporte en sus un galet (28) qui est guidé dans une rainure (29) prévue dans ladite partie latérale (16). Un vérin hydraulique (30) est fixé, au moyen d'un axe (31), à l'extrémité de cette tige (22) qui est opposée à celle sur laquelle est fixé le déflecteur (21). Ce vérin (30) est situé au-dessus de la roue râteleuse (3). Il est relié au circuit hydraulique du tracteur et est commandé à partir de celui-ci. Il permet de déplacer la tige de réglage (22) dans le tube (27) et par conséquent de modifier la position du déflecteur (21) par rapport à la roue râteleuse (3).

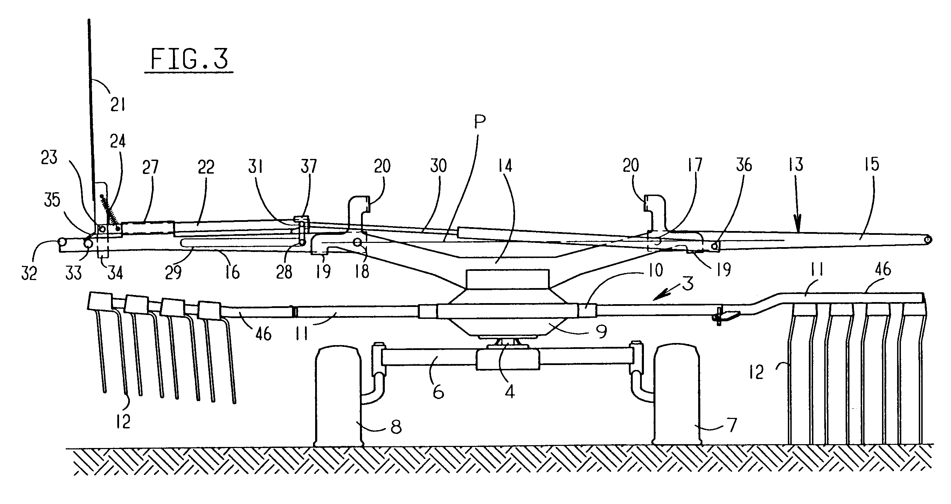

La partie latérale (16) du dispositif de protection (13) comporte deux arrêts (32 et 33). Ceux-ci sont de préférence constitués par des pièces ayant une section ronde. Le premier arrêt (32) se situe près de son bord qui est le plus éloigné de l'axe support (4) de la roue râteleuse (3). Il est placé sous la tige de réglage (22) et il est plus proche du sol que l'axe d'articulation (23) du déflecteur (21) sur ladite tige de réglage. Le second arrêt (33) est également solidaire de la partie latérale (16) du dispositif de protection (13). Il est légèrement plus proche de l'axe support (4) de la roue râteleuse (3) que le premier arrêt (32) et est également légèrement plus près du sol que ce dernier (voir figures 2 et 3).

Le déflecteur (21) comporte deux butées (34 et 35) situées sur le côté opposé par rapport à l'axe d'articulation (23). L'une (34) de ces butées s'étend sensiblement dans le prolongement du déflecteur (21). Sa longueur mesurée à partir dudit axe (23) est égale ou supérieure à la distance entre les deux arrêts (32 et 33) prévus sur le dispositif de protection (13).

L'autre butée (35) s'étend dans un plan qui est sensiblement radial par rapport à l'axe d'articulation (23) du déflecteur (21). Elle se situe du côté de la roue râteleuse (3), lorsque le déflecteur (21) est en position de travail, et forme un angle α, d'environ 45°, avec l'autre butée (34). Sa longueur est inférieure à la distance entre les deux arrêts (32 et 33) du dispositif de protection (13) (voir notamment la figure 4).

Comme cela ressort des figures 1 à 3 et 8, l'autre extrémité du vérin hydraulique (30) est reliée à la seconde partie latérale (15) du dispositif de protection (13) au moyen d'un axe (36). Celui-ci est situé de telle sorte qu'il se trouve en-dessous d'un plan (P) passant par les pivots (17 et 18) des deux parties latérales (15 et 16), lorsqu'elles sont en position de travail. La première partie latérale (16) du dispositif de protection (13) comporte un crochet (37). Celui-ci est placé dans la trajectoire de l'axe d'articulation (31) du vérin hydraulique (30) sur la tige de réglage (22). Il est relativement proche du pivot (18) de la première partie latérale (16) et se situe au-dessus dudit plan (P) passant par les deux pivots (17 et 18).

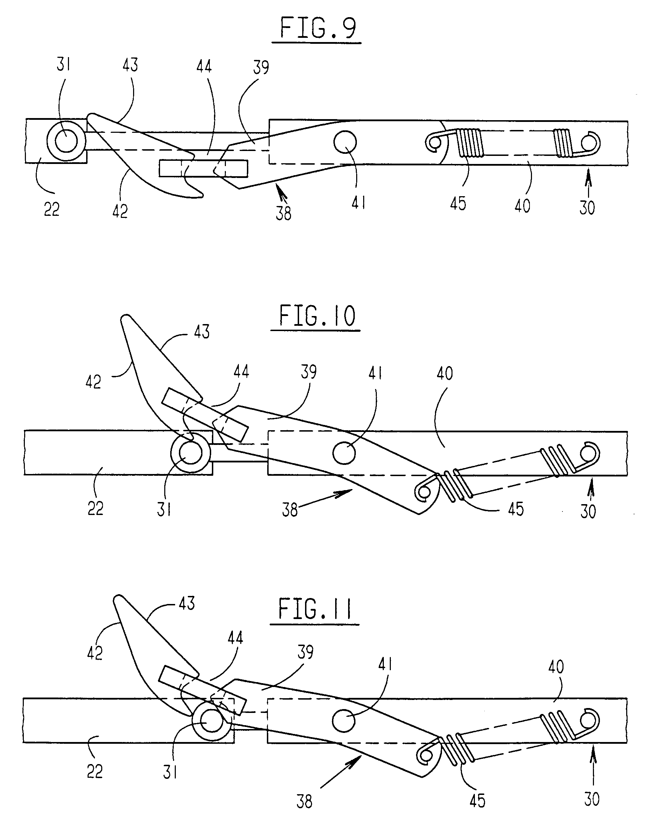

Le vérin hydraulique (30) comporte un dispositif de verrouillage et de déverrouillage automatique (38). Tel que cela ressort des figures 9 à 14, celui-ci se compose d'un verrou (39) qui est articulé sur le corps (40) du vérin hydraulique (30) au moyen d'un axe (41). Son extrémité avant dépasse ledit corps (40) et comporte deux rampes de guidage (42 et 43) et une découpe transversale (44) en forme de V, qui coopèrent avec l'extrémité de l'axe d'articulation (31) entre le vérin hydraulique (30) et la tige de réglage (22) du déflecteur (21). Un ressort de traction (45) est attaché à l'extrémité arrière de ce verrou (39) et au corps (40) du vérin hydraulique (30).

Dans la position de travail représentée sur les figures 1 et 2, les parties latérales (15 et 16) du dispositif de protection (13) sont sensiblement horizontales. Elles empêchent ainsi l'arrivée d'un obstacle quelconque jusqu'aux bras porte-outils (11). Durant le travail d'andainage le carter (9) qui porte les bras porte-outils (11) est entraîné en rotation autour de l'axe central (4), dans le sens de la flèche (F), à partir de l'arbre de prise de force du tracteur. Les galets qui sont reliés aux extrémités des bras porte-outils (11) se déplacent alors dans la came de guidage qui se situe dans le carter (9). Ils commandent lesdits bras (11) de manière à ce que durant chaque révolution, ils pivotent autour de leurs axes géométriques longitudinaux, de telle sorte que dans la partie avant de leur trajectoire, les outils (12) soient dirigés vers le sol et ramassent les végétaux couchés sur ledit sol et que dans une partie latérale de leur trajectoire, ces outils (12) se lèvent et déposent les végétaux ramassés sous la forme d'un andain.

Durant ce travail, le déflecteur (21) se situe sur le côté extérieur de l'andain, afin de limiter la projection latérale des végétaux. Grâce au vérin hydraulique (30) il peut être déplacé sans qu'il soit nécessaire d'interrompre le travail. Ainsi, selon le volume de végétaux, il peut être éloigné ou rapproché des bras porte-outils (11), en vue de la réalisation d'andains bien formés dans toutes les conditions.

Le vérin hydraulique (30) permet aussi de déplacer le déflecteur (21) jusqu'au voisinage immédiat des extrémités des bras porte-outils (11) en vue de réduire la largeur de la machine. Cette position est représentée sur la figure 4. Dans le cas d'une machine ayant alors une largeur comprise dans les normes admises pour les déplacements sur route, cette position pourra être utilisée pour transporter la machine.

Dans le cas d'une machine ayant une largeur plus importante, le même vérin hydraulique (30) permet de basculer le déflecteur (21) au-dessus de la roue râteleuse (3), en vue d'une réduction supplémentaire de ladite largeur. Cette position est représentée sur la figure 3. A cet effet, il suffit de prolonger l'action de raccourcissement du vérin hydraulique (30). Il tire alors sur la tige de réglage (22). Dans un premier temps, le déflecteur (21) arrive en contact avec le premier arrêt (32) de la partie latérale (16) du dispositif de protection (13) (voir figure 4). Ensuite, il pivote autour de son axe d'articulation (23) dans le sens de la flèche (L), comme représenté sur la figure 5, à l'encontre de la force du ressort (24).

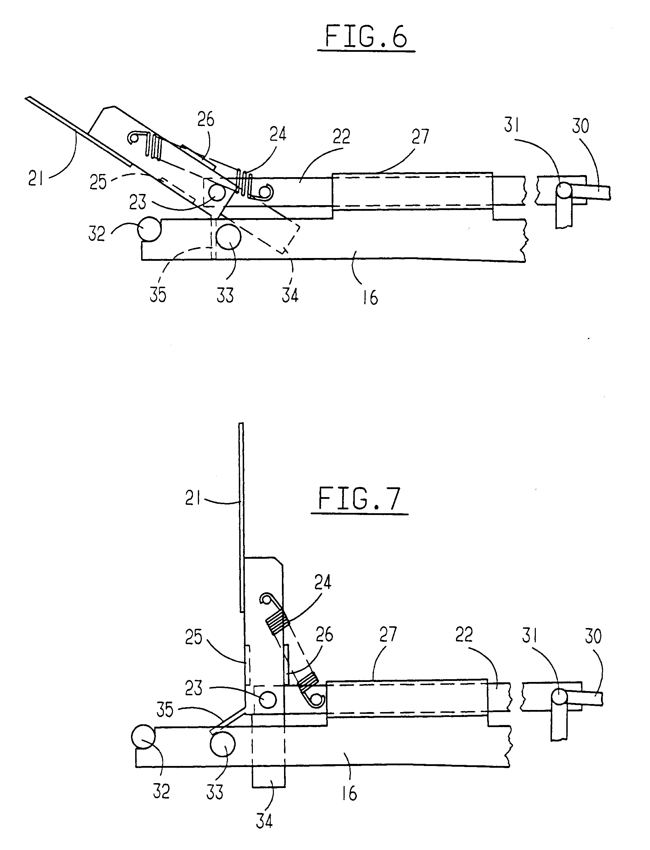

Durant ce pivotement, la butée (35) du déflecteur (21) s'engage entre les deux arrêts (32 et 33) de la partie latérale (16). Elle est ensuite bloquée par le second arrêt (33) de sorte qu'elle fasse tourner le déflecteur (21) autour de son axe (23) jusqu'à ce qu'il arrive dans une position sensiblement verticale et se situe à l'intérieur de la trajectoire décrite par les extrémités extérieures des bras porte-outils (11) (voir figures 6 et 7). Il est retenu dans cette position notamment par le ressort de traction (24) et l'arrêt (26) qui s'appuie contre la tige de réglage (22).

Pour revenir dans la position de travail, il faut actionner le vérin hydraulique (30), de sorte qu'il s'allonge. La tige de réglage (22) se déplace alors vers l'extérieur, de sorte qu'elle s'éloigne de l'axe support (4) de la roue râteleuse (3). De ce fait, la butée (34) du déflecteur (21) rencontre le second arrêt (33) qui la retient. Cette butée (34) fait alors tourner le déflecteur (21) autour de son axe d'articulation (23) dans la direction inverse de celle de la flèche (L) de la figure 5. Durant ce pivotement, le ressort (24) s'étire et la butée (35) s'engage entre les deux arrêts (32 et 33) de la partie latérale (16). Lorsque le déflecteur (21) arrive dans une position sensiblement horizontale, ladite butée (35) rencontre l'arrêt (32). Celui-ci la retient et fait en sorte que le déflecteur (21) continue son pivotement autour de l'axe d'articulation (23). Simultanément, le ressort (24) tire sur le déflecteur (21). Il pivote ainsi jusqu'à ce qu'il arrive dans la position sensiblement verticale qui correspond à la position de travail. Le vérin hydraulique (30) permet alors à nouveau de régler la distance entre le déflecteur (21) et la roue râteleuse (3), en fonction de la masse de végétaux se trouvant au sol.

Comme cela est représenté dans l'exemple de la figure 8, le vérin hydraulique (30) permet d'obtenir une réduction supplémentaire de la largeur de la machine pour le transport. Ainsi, lorsque le déflecteur (21) est dans la position verticale au-dessus de la roue râteleuse (3), tel que représenté sur la figure 3 et décrit précédemment, l'extrémité de l'axe d'articulation (31) entre le vérin hydraulique (30) et la tige de réglage (22) se situe dans le crochet (37) de la partie latérale (16) du dispositif de protection (13). Si on continue à actionner le vérin hydraulique (30) de sorte qu'il se rétracte, l'ensemble constitué par la partie latérale (16), la tige de réglage (22) et le déflecteur (21), se lève autour du pivot (18) de ladite partie latérale (16) sur la partie centrale (14) du dispositif de protection (13). Ce déplacement est arrêté par la butée (20) de ladite partie centrale. A ce moment, le vérin hydraulique (30) exerce une traction qui est dirigée vers le haut sur l'autre partie latérale (15). Celle-ci se déplace ainsi également vers le haut, autour de son pivot (17), jusqu'à ce que qu'elle rencontre l'autre butée (20) de la partie centrale (14). Dans cette position, les deux parties latérales (15 et 16) sont dirigées vers le haut et le déflecteur (21) se situe au-dessus de la partie centrale (14). La largeur du dispositif de protection (13) est ainsi considérablement réduite. Dans ce cas, les bras porte-outils (11) peuvent comporter des parties extérieures (46) démontables en vue de réduire la largeur de la roue râteleuse (3).

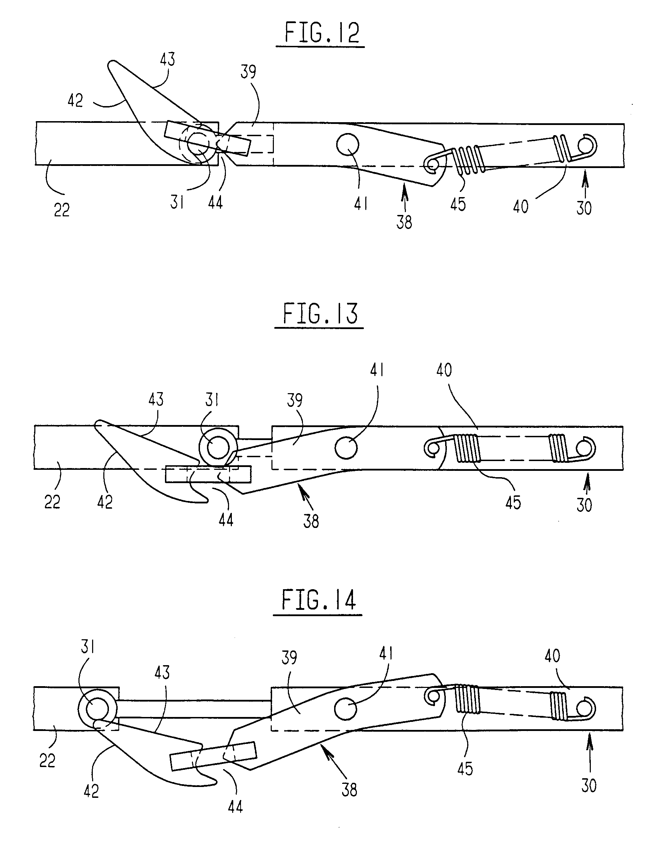

Dans la position dans laquelle les deux parties latérales (15 et 16) du dispositif de protection (13) sont repliées vers le haut, le vérin hydraulique (30) est automatiquement bloqué par le dispositif de verrouillage (38). Il ressort des figures 9 à 14 que ce dispositif (38) est actionné par une des extrémités de l'axe d'articulation (31) entre le vérin hydraulique (30) et la tige de réglage (22). Lorsque durant la mise en position de transport le vérin hydraulique (30) se raccourcit (figures 9 à 11), ladite extrémité de l'axe (31) entre en contact avec la rampe (42) du dispositif de verrouillage (38). Elle soulève alors le verrou (39) autour de l'axe (41) jusqu'à ce qu'elle arrive à la découpe (44). A ce moment, le verrou (39) pivote vers le bas, en raison de la traction du ressort (45), de sorte que ladite extrémité de l'axe (31) se situe au moins partiellement dans la découpe (44) (voir figure 11). Dans cette position, les deux parties latérales (15 et 16) du dispositif de protection (13) sont en position de transport. Il suffit alors d'actionner le vérin hydraulique (30) pour provoquer un léger allongement afin de faire pénétrer ladite extrémité de l'axe (31) dans la pointe du V formé par la découpe (44). Dans cette position, qui est représentée sur la figure 12, le verrou (39) bloque le vérin hydraulique (30) et empêche notamment tout allongement accidentel de celui-ci. Il n'y a donc aucun risque que les parties latérales (15 et 16) reviennent dans la position de travail par suite, par exemple, d'une fausse manoeuvre de la part de l'utilisateur ou d'une fuite sur le circuit hydraulique qui alimente le vérin (30).

Pour revenir dans la position de travail, il faut tout d'abord actionner le vérin hydraulique (30) en vue d'un léger raccourcissement. L'axe d'articulation (31) se déplace alors vers le centre de la roue râteleuse (3). Simultanément, le verrou (39) se dégage vers le bas sous l'effet de la traction du ressort (45) et libère l'extrémité dudit axe (31) (figure 13). Le vérin hydraulique (30) peut alors être actionné pour qu'il s'allonge. Dans un premier temps, l'extrémité de l'axe (31) glisse sur la rampe (43) du verrou (39) et dégage ce dernier vers le bas (figure 14). Ensuite, les deux parties latérales (15 et 16) du dispositif de protection (13) tournent autour de leurs pivots (17 et 18) jusqu'à ce qu'elles arrivent dans une position horizontale et rencontrent les butées (19). A partir de ce moment, le vérin hydraulique (30) actionne à nouveau la tige de réglage (22) du déflecteur (21) comme cela a été décrit précédemment.

Il est bien évident que l'invention n'est pas limitée aux modes de réalisation tels que décrits ci-dessus et représentés sur les dessins annexés. Des modifications restent possibles, notamment en ce qui concerne la constitution des divers éléments ou par substitution d'équivalents techniques, sans pour autant sortir du domaine de protection défini dans les revendications.

## Revendications

1. Machine de fenaison, notamment une andaineuse de végétaux coupés, comportant un bâti support (1), au moins une roue râteleuse (3), un dispositif de protection (13) qui s'étend au moins partiellement autour de ladite roue râteleuse (3) et un déflecteur (21) qui limite la projection latérale des végétaux déplacés par la roue râteleuse (3), lequel déflecteur (21) est articulé à travers un axe (23) sur une tige de réglage (22) permettant de modifier sa position par rapport à la roue râteleuse (3), caractérisée par le fait qu'elle comporte un vérin hydraulique (30) qui se situe au-dessus de la roue râteleuse (3) et qui est relié à la tige de réglage (22) de manière à pouvoir la déplacer pour modifier la position du déflecteur (21), et qu'elle est pourvue de moyens (32 à 35) qui font basculer le déflecteur (21) autour de son axe d'articulation (23) lorsqu'il est déplacé au moyen du vérin hydraulique (30).

2. Machine selon la revendication 1, caractérisée par le fait que l'axe d'articulation (23) entre le déflecteur (21) et la tige de réglage (22) est dirigé dans la direction d'avancement (A).

3. Machine selon la revendication 1, caractérisée par le fait qu'elle comporte un ressort de traction (24) qui est fixé sur la tige (22) en un point situé sensiblement au même niveau que l'axe d'articulation (23) du déflecteur (21) et sur ledit déflecteur (21) en un point situé en-dessous dudit axe d'articulation (23) lorsque la machine est en position de travail.

4. Machine selon la revendication 1, caractérisée par le fait que le vérin hydraulique (30) est relié à la tige de réglage (22) par un axe d'articulation (31).

5. Machine selon la revendication 1, caractérisée par le fait que le déflecteur (21) comporte deux butées (34 et 35) qui se situent, par rapport à son axe d'articulation (23), sur le côté opposé à celui sur lequel il est lui-même situé et dont l'une (34) est dirigée sensiblement dans le prolongement dudit déflecteur et l'autre (35) forme un angle α avec la première.

6. Machine selon la revendication 5, caractérisée par le fait que le dispositif de protection (13) comporte un premier arrêt (32) qui se situe près de son bord qui est le plus éloigné de l'axe support (4) de la roue râteleuse (3), qui est placé sous la tige de réglage (22) et qui est plus proche du sol que l'axe d'articulation (23) du déflecteur (21) et un second arrêt (33) qui est légèrement plus proche de l'axe support (4) de la roue râteleuse (3) que le premier arrêt (32) et qui est légèrement plus près du sol que ce dernier.

7. Machine selon l'une quelconque des revendications précédentes, caractérisée par le fait que le dispositif de protection (13) comprend deux parties latérales (15 et 16) articulées sur une partie centrale (14) au moyen de pivots (17, 18) dirigés dans la direction d'avancement (A), que la tige de réglage (22) est guidée sur la première partie latérale (16) et que le vérin hydraulique (30) est relié par l'une de ses extrémités à la tige de réglage (22) au moyen d'un axe (31) et par son autre extrémité à la seconde partie latérale (15) du dispositif de protection (13) au moyen d'un axe (36).

8. Machine selon la revendication 7, caractérisée par le fait que l'axe d'articulation (36) du vérin hydraulique (30) avec la seconde partie latérale (15) du dispositif de protection (13) se situe en-dessous d'un plan (P) passant par les pivots (17 et 18) des deux parties latérales (15 et 16), lorsque celles-ci sont en position de travail.

9. Machine selon la revendication 7 ou 8, caractérisée par le fait que la première partie latérale (16) du dispositif de protection (13) comporte un crochet (37) pour l'axe d'articulation (31) du vérin hydraulique (30) avec la tige de réglage (22) du déflecteur (21), lequel crochet se situe au-dessus d'un plan (P) passant par les pivots (17 et 18) des deux parties latérales (15 et 16) du dispositif de protection (13).

10. Machine selon l'une quelconque des revendications 7 à 9, caractérisée par le fait que le vérin hydraulique (30) comporte un dispositif de verrouillage et de déverrouillage automatique (38).

11. Machine selon la revendication 10, caractérisée par le fait que le dispositif de verrouillage et de déverrouillage automatique (38) se compose d'un verrou (39) qui est articulé sur le corps (40) du vérin hydraulique (30) et qui coopère avec l'axe d'articulation (31) dudit vérin hydraulique (30) sur la tige de réglage (22) du déflecteur (21).

12. Machine selon la revendication 11, caractérisée par le fait qu'un ressort (45) est lié au verrou (39).

13. Machine selon la revendication 11 ou 12, caractérisée par le fait que le verrou (39) comporte deux rampes de guidage (42 et 43) et une découpe (44) en forme de V.

## Claims

1. Haymaking machine, especially a windrower for cut plants, comprising a support frame (1), at least one raking wheel (3), a protecting device (13) which extends at least partly around the said raking wheel (3) and a deflector (21) which limits the lateral projections of the plants displaced by the raking wheel (3), the said deflector being articulated by means of an axis (23) on an adjustement rod (22) which allows to change its position with regard to the raking wheel (3), ***characterised in that*** it comprises an hydraulic jack (30) which is located above the raking wheel (3) and which is connected to the adjustment rod (22) in order to be able to displace this latter to change the position of the deflector (21), and that it is provided with means (32 to 35) which make the deflector (21) rotate about its axis of articulation (23) when it is displaced by means of the hydraulic jack (30).

2. Machine in accordance with claim 1, ***characterised in tha*****t** the axis of articulation (23) located between the deflector (21) and the adjustment rod (22) is directed towards the direction of advance (A).

3. Machine in accordance with claim 1, ***characterised in th*****at** it comprises a draw-spring (24) which is fastened to the rod (22) in a point located approximately at the same level as the axis of articulation (23) of the deflector (21) and to the said deflector (21) in a point located under the said axis of articulation (23) when the machine is in the working position.

4. Machine in accordance with claim 1, ***characterised in that*** the hydraulic jack (30) is connected to the adjustment rod (22) by means of an axis of articulation (23).

5. Machine in accordance with claim 1, ***characterised in that*** the deflector (21) comprises two stops (34 and 35) which are located, with regard to its axis of articulation (23) on the side opposite to that on which it is itself located and one of which (34) is directed approximately in the continuation of the said deflector and the other (35) forms an angle α with the first one.

6. Machine in accordance with claim 5, ***characterised in that*** the protecting device (13) comprises a first stop (32) which is located in the vicinity of its border most remote from the support axis (4) of the raking wheel (3), which is placed under the adjustment rod (22) and which is nearer to the soil as the axis of articulation (23) of the deflector (21) and a second stop (33) which is slightly nearer to the support axis (4) of the raking wheel (3) as the first stop (32) and is slightly nearer to the soil as this latter.

7. Machine in accordance with any one of the preceding claims, ***characterised in that*** the protecting device (13) comprises two lateral parts (15 and 16) articulation on a central part (14) by means of pivots (17, 18) directed towards the direction of advance (A), that the adjustment rod (22) is guided on the first lateral part (16) and that the hydraulic jack (30) is connected by one of its ends to the adjustment rod (22) by means of an axis (31) and by its other end to the second lateral part (15) of the protecting device (13) by means of an axis (36).

8. Machine in accordance with claim 7, ***characterised in that*** the axis of articulation (36) of the hydraulic jack (30) with the second lateral part (15) of the protecting device (13) is located under a plan (P) passing through the pivots (17 and 18) of the two lateral parts (15 and 16), when these are in working position.

9. Machine in accordance with claim 7 or 8, ***characterised in that*** the first lateral part (16) of the protecting device (13) comprises a hook (37) for the axis of articulation (31) of the hydraulic jack (30) with the adjustment rod (22) of the deflector (21), the said hook being located above a plan (P) passing through the pivots (17 and 18) of the two lateral parts (15 and 16) of the protecting device (13).

10. Machine in accordance with any one of claims 7 to 9, ***characterised in that*** the hydraulic jack (30) comprises an automatic locking and unlocking device (38).

11. Machine in accordance with claim 10, ***characterised in that*** the automatic locking and unlocking device (38) is made of a bolt (39) which is articulated on the body (40) of the hydraulic jack (30) and which cooperates with the axis of articulation (31) of the said hydraulic jack (30) on the adjustment rod (22) of the deflector (21).

12. Machine in accordance with claim 11, ***characterised in that*** a spring (45) is connected to the bolt (39).

13. Machine in accordance with claim 11 or 12, ***characterised in that*** the bolt (39) comprises two guiding ramps (42 and 43) and a V-shaped hole (44).

## Patentansprüche

1. Heuwerbungsmaschine, insbesondere ein Schwader für gemähtes Pflanzengut, der ein Traggestell (1), mindestens ein Rechrad (3), eine Schutzvorrichtung (13), die sich mindestens teilweise um das Rechrad (3) erstreckt, und ein Schwadformer (21), der das seitwärts Schleudern des Pflanzenguts durch das Rechrad (3) begrenzt, welcher Schwadformer (21) durch eine Achse (23) an einer Verstellstange (22) angelenkt ist, die es erlaubt seine Lage in bezug auf das Rechrad (3) zu ändern, aufweist, dadurch gekennzeichnet, daß sie einen Hydraulikzylinder (30) besitzt, der sich über dem Rechrad (3) befindet, und der mit der Verstellstange (22) derart verbunden ist, daß er sie verschieben kann um die Lage des Schwadformers (21) zu ändern, und daß sie mit Mitteln (32 bis 35) versehen ist, die den Schwadformer (21) um seine Gelenkachse (23) schwenken machen, wenn er mittels des Hydraulikzylinders (30) verstellt wird.

2. Maschine nach Anspruch 1, dadurch gekennzeichnet, daß die Gelenkachse (23) zwischen dem Schwadformer (21) und der Verstellstange (22) in Fahrtrichtung (A) ausgerichtet ist.

3. Maschine nach Anspruch 1, dadurch gekennzeichnet, daß sie eine Zugfeder (24) besitzt, die auf der Verstellstange (22) an einem Punkt befestigt ist, der sich nahezu auf dem selben Niveau als die Gelenkachse (23) des Schwadformers (21) befindet, und auf dem Schwadformer (21) an einem Punkt befestigt ist, der sich unterhalb der Gelenkachse (23) befindet, wenn die Maschine in Arbeitsstellung ist.

4. Maschine nach Anspruch 1, dadurch gekennzeichnet, daß der Hydraulikzylinder (30) durch eine Gelenkachse (31) mit der Verstellstange (22) verbunden ist.

5. Maschine nach Anspruch 1, dadurch gekennzeichnet, daß der Schwadformer (21) zwei Anschläge (34 und 35) aufweist, die sich in Bezug auf seine Gelenkachse (23), auf der entgegengesetzte Seite befinden zu derjenige auf welcher er sich selbst befindet, und von welchen einer (34) im wesentlichen in Verlängerung des Schwadformers ausgerichtet ist, und der andere (35) mit dem ersten einen Winkel α bildet.

6. Maschine nach Anspruch 5, dadurch gekennzeichnet, daß die Schutzvorrichtung (13) einen ersten Anschlag (32) aufweist, der sich in der Nähe von ihrem am weitesten von der Tragachse (4) des Rechrads (3) entfernten Rand, unterhalb der Verstellstange (22) und näher am Boden als die Gelenkachse (23) des Schwadformers (21) befindet, und einen zweiten Anschlag (33) aufweist, der etwas näher an der Tragachse (4) des Rechrads (3) als der erste Anschlag (32), und etwas näher am Boden als der letztere, angeordnet ist.

7. Maschine nach irgendeinem der vorhergehenden Ansprüche, dadurch gekennzeichnet, daß die Schutzvorrichtung (13) zwei Seitenteile (15 und 16) aufweist, die auf einem Mittelteil (14) durch Drehachsen (17, 18) angelenkt sind, die in Fahrrichtung (A) ausgerichtet sind, daß die Verstellstange (22) auf dem ersten Seitenteil (16) geführt ist, und daß der Hydraulikzylinder (30) mit einem seiner Enden mittels einer Achse (31) an der Verstellstange (22), und mit seinem anderen Ende mittels einer Achse (36) an dem zweiten Seitenteil (15) der Schutzvorrichtung (13) angeordnet ist.

8. Maschine nach Anspruch 7, dadurch gekennzeichnet, daß die Gelenkachse (36) des Hydraulikzylinders (30) mit dem zweiten Seitenteil (15) der Schutzvorrichtung (13) sich unterhalb einer Ebene (P) befindet, die durch die Drehachsen (17 und 18) der zwei Seitenteile (15 und 16) läuft, wenn diese in Arbeitsstellung sind.

9. Maschine nach Anspruch 7 oder 8, dadurch gekennzeichnet, daß das erste Seitenteil (16) der Schutzvorrichtung (13) einen Hacken (37) für die Gelenkachse (31) des Hydraulikzylinders (30) mit der Verstellstange (22) des Schwadformers (21) aufweist, welcher Hacken sich oberhalb einer Ebene (P), die durch die Drehachsen (17 und 18) der zwei Seitenteile (15 und 16) der Schutzvorrichtung (13) läuft, befindet.

10. Maschine nach irgendeinem der Anprüche 7 bis 9, dadurch gekennzeichnet, daß der Hydraulikzylinder (30) eine automatische Verriegelungs- und Entriegelungsvorrichtung (38) aufweist.

11. Maschine nach Anspruch 10, dadurch gekennzeichnet, daß die automatische Verriegelungs- und Entriegelungsvorrichtung (38) aus einem Riegel (39), der auf dem Körper (40) des Hydraulikzylinders (30) angelenkt ist und der mit der Gelenkachse (31) des Hydraulikzylinders (30) mit der Verstellstange (22) des Schwadformers (21) zusammen wirkt, besteht.

12. Maschine nach Anspruch 11, dadurch gekennzeichnet, daß eine Feder (45) an dem Riegel (39) angebracht ist.

13. Maschine nach Anspruch 11 oder 12, dadurch gekennzeichnet, daß der Riegel (39) zwei Leitkanten (42 und 43) und einen V-förmigen Ausschnit (44) aufweist.
